# EUROPÄISCHE PATENTSCHRIFT

(11) **EP 1 498 217 B1**
(45) Veröffentlichungstag und Bekanntmachung des Hinweises auf die Patenterteilung: **28.05.2008**
(21) Anmeldenummer: 04450145.0
(22) Anmeldetag: 14.07.2004
(51) Int. Cl.: B23P 11/00, B23P 15/00, F16C 11/04, B21K 25/00, F16B 17/00, B60S 1/34

(54) **Verfahren zur Herstellung eines Leichtbau-Funktionsteils und Leichtbau-Funktionsteil**
Method of manufacturing a functional part of lightweight constructionand functional part of lightweight construction
Procédé de fabrication d'un élément fonctionnel à construction légère et élément fonctionnel à construction légère

(30) Priorität: 17.07.2003 AT 11252003
(43) Veröffentlichungstag der Anmeldung: 19.01.2005
(73) Patentinhaber: DGS Druckguss Systeme AG, 9015 St. Gallen (CH)
(72) Erfinder: Pichlbauer, Peter, Ing., 9015 ST. Gallen (CH); Schober, Michael, Ing., 9015 St. Gallen (CH)
(74) Vertreter: Babeluk, Michael

(56) Entgegenhaltungen:
- EP-A- 0 575 241
- EP-A- 1 279 449
- WO-A-93/09980
- WO-A-03/004322
- DE-A1- 19 823 409
- GB-A- 2 311 338
- US-A- 3 041 717
- US-A- 3 126 568
- US-A- 6 110 064
- US-A1- 2002 173 395

## Beschreibung

Die vorliegende Erfindung betrifft ein Verfahren gemäß dem Oberbegriff von Patentanspruch 1 und einen Leichtbau Funktionsteil gemäß dem Oberbegriff von Patentanspruch 3.

Im Automobilbau werden in wachsendem Umfang Leichtbaufunktionsteile eingesetzt, um das Fahrzeuggewicht zu verringern. Dabei handelt es sich allgemein um Bauteile, die mechanische Belastungen übertragen oder aufnehmen sollen, wie beispielsweise eine Halterung für einen Handbremshebel, einen tragenden Bauteil eines Fahrzeugsitzes oder ein Gehäuse für eine Kühlmittelpumpe. Die Fertigung solcher Bauteile im Aluminium- oder Magnesiumdruckgussverfahren ermöglicht es, eine beträchtliche Gewichtsreduktion bei vorbestimmten Festigkeitseigenschaften zu erreichen. Aufgrund der spezifischen Materialeigenschaften dieser Aluminium- oder Magnesiumbauteile ist es jedoch erforderlich, besonderes Augenmerk auf die Abschnitte zu richten, in denen hohe Belastungen eingeleitet werden, wie dies beispielsweise bei Lagerstellen der Fall ist. Hier ist es die Aufgabe des Konstrukteurs, die Kräfte so in den Bauteil einzuleiten, dass die zulässigen Spannungen nicht überschritten werden. Ein weiterer wichtiger Aspekt bei der Konstruktion solcher Bauteile ist ein möglichst einfacher Aufbau, der eine kostengünstige Herstellung in großen Stückzahlen ermöglicht.

Aus der EP 0 575 241 B ist ein Scheibenwischer bekannt, bei dem Gelenkteile in Öffnungen beweglich eingesetzt sind. Solche Lösungen sind jedoch nur dann geeignet, wenn entweder relativ geringe Kräfte an der Verbindungsstelle auftreten oder wenn alle Bauteile eine entsprechende Grundfestigkeit aufweisen. Für Leichtbauanwendungen ist eine solche Lösung nicht geeignet.

Aus der US 6,434,824 A ist ein Verfahren zur Herstellung einer Verbindung zwischen einem Rohr und einer Platte bekannt, das dazu geeignet ist, Wärmetauscher herzustellen. Dabei wird ein konischer Dorn in ein Ende des Rohres eingepresst, um dieses aufzuweiten und dadurch eine Verbindung mit der Platte herzustellen. Ein solches Verfahren ist geeignet, eine flüssigkeitsdichte Verbindung herzustellen, wie dies für einen Wärmetauscher wesentlich ist, aber ein mechanisch belasteter Bauteil kann nicht in befriedigender Weise hergestellt werden.

Weiters zeigt die US 2002/0173395 die den nächstliegenden Stand der Technik bildet. A eine Fahrradkette mit rohrförmigen Hülsen die in den seitlichen Stegen verstemmt sind. Leichtbau wird bei dieser Lösung durch das Vorsehen verschiedener Öffnungen erreicht, nicht jedoch durch die gewählten Materialien.

Aufgabe der vorliegenden Erfindung ist es, ein Verfahren zur Herstellung eines solchen Leichtbau-Funktionsteiles anzugeben, das einfach durchführbar ist und das eine mechanisch optimale Ausbildung insbesondere im Bereich von Lagerstellen ermöglicht. Eine weitere Aufgabe der Erfindung ist es, einen solchen Leichtbau-Funktionsteil zu schaffen.

Erfindungsgemäß werden diese Aufgaben durch die Merkmale von Patentansprüchen 1 und 3 gelöst Vorteilhafte Ausgestaltungen ergeben sich aus den zeweiligen Unteransprüchen. Das Rohr ist dabei an die im Lagerbereich auftretenden Kräfte und sonstigen Randbedingungen optimal angepasst. Die Öffnungen im Grundkörper können, falls dies aufgrund der einzuhaltenden Toleranzen möglich ist, bereits während des Gießvorganges hergestellt werden, so dass vor dem Einführen des Rohres keine zusätzliche Bearbeitung erforderlich ist. Andererseits können die Öffnungen auch durch Eindringen einer Bohrung nachträglich geschaffen werden. Eine besonders wirtschaftliche Ausführungsvariante des erfindungsgemäßen Verfahrens ist dadurch gekennzeichnet, dass die Aufweitung der Stirnflächen gleichzeitig erfolgt. Ein Halten, Festklemmen oder dergleichen des Rohres ist dadurch nicht erforderlich.

Wichtig ist im Rahmen der Erfindung insbesondere die Tatsache, dass die Aufweitung der Stirnflächen durch Einführen eines Dorns mit einem kegelstumpfförmigen Ende erfolgt, der mehrere in Umfangsrichtung verteilte Vorsprünge aufweist, um nach außen gerichtete Haltenasen am Rohr auszubilden. Es wird auf diese Weise eine Verbindung hergestellt, die besonders widerstandsfähig gegenüber Torsionsbeanspruchungen ist, die am Rohr in unvermeidlicher Weise auftreten, da dieses als Lagerteil ausgebildet ist. Insbesondere kann auf diese Weise trotz extremer mechanischer Festigkeit eine Rissbildung im Bereich der Öffnungen im Grundkörper vermieden werden.

Besonders wichtig bei der vorliegenden Erfindung ist es, dass zur Verdrehsicherung Haltenasen vorgesehen sind, die auch bei längerer Belastung ein Lockern des Rohres verhindern. Dabei hat es sich herausgestellt, dass eine tatsächlich zuverlässige Verbindung nur dann erreicht werden kann, wenn der Grundkörper, der aus Leichtmetalldruckguss hergestellt ist, bereits vor dem Einstemmen Ausnehmungen aufweist, die dazu ausgebildet sind, die Haltenasen ausfzunehmen.

Besonders vorteilhaft ist es, wenn das Rohr im Grundkörper formschlüssig und reibschlüssig gehalten ist. Da das Rohrmaterial eine höhere Festigkeit und auch einen höheren Elastizitätsmodul aufweist als das Material des Grundkörpers, bleibt nach der plastischen Verformung des Rohres und dem Zurückfedern nach Beendigung der Krafteinwirkung eine Spannung bestehen, die den Grundkörper von außen auf das Rohr aufpresst und eine reibschlüssige Verbindung herstellt. Durch eine unregelmäßige plastische Verformung am Rohr kann zusätzlich eine formschlüssige Verbindung hergestellt werden, die einen zusätzlichen Sicherheitsfaktor darstellt und die Festigkeit erhöht. In diesem Zusammenhang ist es besonders wichtig, dass im Bereich der Stirnflächen des Rohres mehrere nach außen gerichtete Haltenasen vorgesehen sind, die über die Kontur der eigentlichen Bohrung bzw. zylindrischen Ausnehmung hinaus in den Grundkörper eindringen. Im Grundkörper sind ensprechende Ausnehmungen vorgesehen in die die Haltenasen eindringen. Insbesondere ist es dabei vorteilhaft, wenn zwischen drei und sechs gleichmäßig am Umfang verteilte Haltenasen vorgesehen sind.

Besonders vorteilhaft ist es, wenn das Rohr im Grundkörper mit einer Spielpassung gehalten ist und feste Verbindung ausschließlich durch die Haltenasen gegeben ist. Auf diese Weise kann auf eine besonders einfache Montage erreicht werden, da das Einführen des Rohres problemlos möglich ist. Gleichzeitig kann die mechanische Belastung des Grundkörpers minimiert werden.

Günstigerweise ist es nicht unbedingt erforderlich, nach dem Gießen die Öffnungen zu bearbeiten, was die Herstellung weiter vereinfacht.

In der-Folige-Wird die Erfindung anhand der in den Figuren dargestellten Ausbildungsbeispielen näher erläutert. Es zeigen:
- Fig. 1: schematisch einen Schnitt durch einen Abschnitt eines erfindungsgemäßen Funktionsteiles vor dem Einstemmen;
- Fig. 2: ein Detail von Fig. 1 nach dem Einstemmen des Rohres in einem Schnitt nach Linie II - II von Fig. 3; und
- Fig. 3: eine seitliche Ansicht des Rohres.

Der Leichtbau-Funktionsteil besteht aus einem im Leichtmetall-Druckgussverfahren hergestellten Grundkörper 1 und einem im Grundkörper 1 befestigten rohrförmigen Lagerteil 2, der zur Aufnahme eines beweglichen Teiles, das hier nicht dargestellt ist, dient. Der Grundkörper 1 besitzt im Bereich des Lagerteils 2 zwei im Wesentlichen parallele Wandflächen 3, 4, in denen im Verlauf einer Achse 5 Öffnungen 6, 7 vorgesehen sind. Das Rohr 2, das den Lagerteil bildet, ist so in die Öffnungen 6, 7 der Wandflächen 3, 4 eingeführt, dass die Stirnflächen 8, 9 des Rohres 2 bündig mit den Oberflächen 10, 11 der Wandflächen 3, 4 sind.

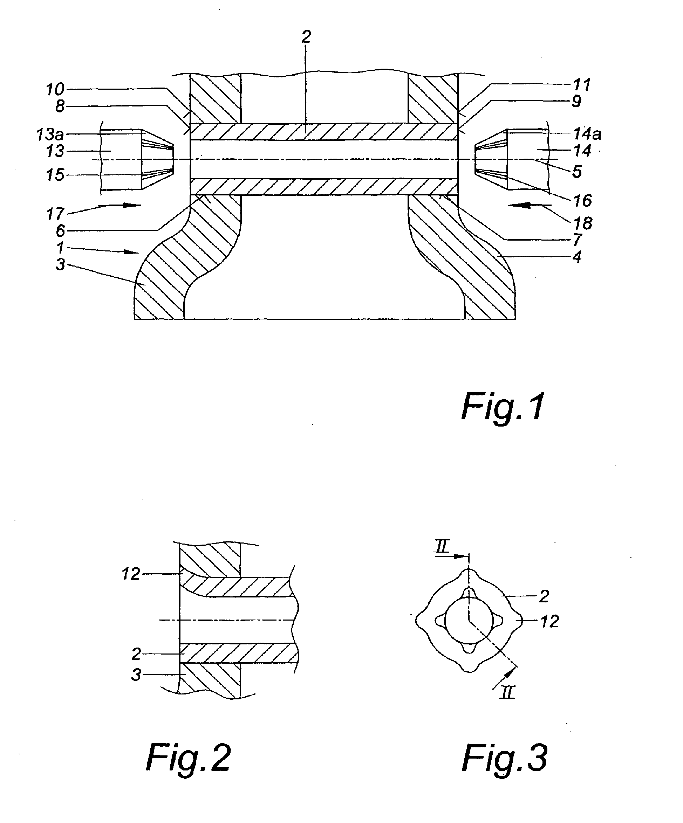

Aus den Fig. 2 und Fig. 3 ist ersichtlich, dass das Rohr 2 im Bereich seiner Stirnflächen 8, 9 jeweils vier gleichmäßig über den Umfang verteilte Haltenasen 12 aufweist, die form- und reibschlüssig mit den Wandflächen 3, 4 in Verbindung stehen. Dadurch ist ein fester Sitz des Rohres 2 im Grundkörper 1 gewährleistet.

In der Folge wird das Herstellungsverfahren für den Leichtbau-Funktionsteil erläutert.

Zunächst wird das Rohr 2 mit Spiel in die Öffnungen 6, 7 des Grundkörpers 1 eingeführt. Danach wird gleichzeitig von beiden Seiten jeweils ein Dorn 13, 14 mit einem kegelstumpfförmigen Ende 13a, 14a in das Rohr 2 eingeführt. An den kegelstumpfförmigen Enden 13a, 14a sind vier in Umfangsrichtung verteilte Vorsprünge 15, 16 vorgesehen, um im Rohr 2 die Haltenasen 12 auszubilden.

Falls erforderlich, kann das Rohr 2 während des Eindrückens der Dorne 13, 14 in Richtung der Pfeile 17, 18 in geeigneter Weise gehalten werden. Bei einer Alternative des erfindungsgemäßen Herstellungsverfahrens kann das Rohr 2 zu Beginn unter leichter Krafteinwirkung im Sinne einer Presspassung in den Grundkörper 1 eingeführt werden.

Die vorliegende Erfindung ermöglicht es, einen Leichtbau-Funktionsteil mit geringstmöglichem Fertigungsaufwand herzustellen.

## Patentansprüche

1. Verfahren zur Herstellung eines Leichtbau-Funktionsteils, mit einem Grundkörper (1) und einem im Grundkörper (1) angeordneten Lagerteil (2) zur Aufnahme eines beweglichen Teiles, wobei zunächst im Grundkörper (1) zwei in Axialrichtung fluchtende Öffnungen (6, 7) hergestellt werden, danach in diese Öffnungen (6, 7) ein Rohr (2) eingeführt wird, und dieses Rohr (2) durch Aufweiten der Stirnflächen (8, 9) in den beiden Öffnungen (6, 7) verstemmt wird, um eine feste Verbindung herzustellen, wobei die Aufweitung der Stirnflächen (8, 9) durch Einführen jeweils eines Dornes (13, 14) mit einem kegelstumpfförmigen Ende (13a, 14a) erfolgt, der mehrere in Umfangsrichtung verteilte Vorsprünge (15, 16) aufweist, um nach außen gerichtete Haltenasen (12) am Rohr (2) auszubilden **dadurch gekennzeichnet, dass** der Grundkörper (1) im Leichtmetall-Druckgussverfahren hergestellt ist und Ausnehmungen aufweist, in die die Haltenasen eindringen, und dass das Rohr (2) einen höheren Elastizitätsmodul aufweist als der Grundkörper (1).

2. Verfahren nach Anspruch 1, **dadurch gekennzeichnet, dass** die Aufweitung der Stirnflächen (8, 9) gleichzeitig erfolgt.

3. Leichtbau-Funktionsteil mit einem Grundkörper (1) und einem im Grundkörper (1) angeordneten Lagerteil (2) zur Aufnahme eines beweglichen Teiles, welcher Lagerteil (2) durch ein Rohr (2) gebildet ist, das im Bereich seiner Stirnflächen in zwei Öffnungen (6, 7) im Grundkörper (1) gehalten ist, und das durch plastische Verformung in den Öffnungen (6, 7) verstemmt ist, indem die Stirnflächen (8, 9) aufgeweitet sind, **dadurch gekennzeichnet, dass** der Grundkörper (1) im Leichtmetall-Druckgussverfahren hergestellt ist und Ausnehmungen aufweist, die die während des Aufweitens der Stirnflächen (8,9) des Rohres (2) ausgebildeten Haltenasen aufnehmen, und dass der Lagerteil (2) einen höheren Elastizitätsmodul aufweist als der Grundkörper (1).

4. Leichtbau-Funktionsteil nach Anspruch 3, **dadurch gekennzeichnet, dass** das Rohr (2) im Grundkörper (1) formschlüssig und reibschlüssig gehalten ist.

5. Leichtbau-Funktionsteil nach einem der Ansprüche 3 oder 4, **dadurch gekennzeichnet, dass** zwischen drei und sechs gleichmäßig am Umfang verteilte Haltenasen (12) vorgesehen sind

6. Leichtbau-Funktionsteil nach einem der Ansprüche 3 bis 5, **dadurch gekennzeichnet, dass** die Stirnflächen (8, 9) des Rohres (2) bündig mit den Flächen (10, 11) des Grundkörpers (1) abschließen, in denen die Öffnungen (6, 7) ausgebildet sind.

7. Leichtbau-Funktionsteil nach einem der Ansprüche 3 oder 6, **dadurch gekennzeichnet, dass** das Rohr (2) im Grundkörper (1) mit einer Spielpassung gehalten ist und feste Verbindung ausschließlich durch die Haltenasen (12) gegeben ist.

8. Leichtbau-Funktionsteil nach einem der Ansprüche 3 bis 7, **dadurch gekennzeichnet, dass** Öffnungen (6, 7) im Grundkörper (1) unbearbeitet sind.

## Claims

1. Method for producing a light-weight functional part, with a main body (1) and a bearing part (2) positioned in the main body (1) for receiving a movable part, wherein firstly two axially aligned openings (6, 7) are established in the main body (1), and secondly a pipe (2) is inserted into said openings (6, 7) and is locked in the openings (6, 7) by widening the front ends (8, 9) in order to provide a firm fit, the widening of the front ends (8, 9) being effected by introducing on each side a mandrel (13, 14) with a conical tip (13a, 14a) having a number of ridges (15, 16) distributed along its circumference for creating outwardly directed holding noses (12) on the pipe (2), **characterised in that** the main body (1) is made by a light-metal pressure casting process and has recesses into which the holding noses enter, and that the pipe (2) has a greater modulus of elasticity than the main body (1).

2. Method according to claim 1, **characterised in that** the widening of the front ends (8, 9) is carried out simultaneously.

3. Light-weight functional part with a main body (1) and a bearing part (2) positioned in the main part (1) for receiving a movable part, said bearing part (2) being configured as a pipe (2), which is held in the areas of its front ends in two openings (6, 7) of the main body (1) and is locked in the openings (6, 7) by plastic deformation resulting from widening the front ends (8, 9), **characterised in that** the main body (1) is made by a light-metal pressure casting process and has recesses into which protrude the holding noses formed during the widening of the front ends (8, 9) of the pipe (2), and that the bearing part (2) has a greater modulus of elasticity than the main body (1).

4. Light-weight functional part according to claim 3, **characterised in that** the pipe (2) is held in the main body (1) by its shape and by friction.

5. Light-weight functional part according to claim 3 or 4, **characterised in that** three to six holding noses (12) are provided, which are distributed uniformly along the circumference.

6. Light-weight functional part according to any of claims 3 to 5, **characterised in that** the front ends (8, 9) of the pipe (2) are even with the faces (10, 11) of the main body (1), in which the openings (6, 7) are provided.

7. Light-weight functional part according to claim 3 or 6, **characterised in that** the pipe (2) is held in the main body (1) in a loose fit and that a firm connection is provided exclusively by the holding noses (12).

8. Light-weight functional part according to any of claims 3 to 7, **characterised in that** the openings (6, 7) in the main body (1) are left unworked.

## Revendications

1. Procédé de fabrication d'un élément fonctionnel léger, ayant un corps de base (1) et une partie de palier (2) logée dans le corps de base (1) pour recevoir une partie mobile,
selon lequel
on réalise tout d'abord deux orifices (6, 7) alignés dans la direction axiale dans le corps de base (1), puis on introduit un tube (2) dans les orifices (6, 7), et on mate le tube (2) en élargissant les surfaces frontales (8, 9) dans les deux orifices (6, 7) pour réaliser une liaison solidaire, l'élargissement des surfaces frontales (8, 9) se faisant par l'introduction de chaque fois une broche (13, 14) ayant une extrémité en forme de tronc de cône (13a, 14a), munie de plusieurs parties en saillie (15, 16) réparties dans la direction périphérique, pour développer sur le tube (2) des becs de retenue (12) dirigés vers l'extérieur,
**caractérisé en ce que**
le corps de base (1) est fabriqué par un procédé de coulée par injection de métal léger et il comporte des cavités dans lesquelles pénètrent les becs de retenue et
le tube (2) a un module d'élasticité plus grand que celui du corps de base (1).

2. Procédé selon la revendication 1,
**caractérisé en ce que**
l'élargissement des surfaces frontales (8, 9) se fait simultanément.

3. Elément fonctionnel léger ayant un corps de base (1) et une pièce de palier (2) logée dans le corps de base (1) pour recevoir une pièce mobile, la pièce de palier (2) étant formée par un tube (2) tenu dans la région de ses surfaces frontales dans deux ouvertures (6, 7) du corps de base (1) et qui est maté dans les ouvertures (6, 7) par déformation plastique en élargissant les surfaces frontales (8, 9),
**caractérisé en ce que**
le corps de base (1) est fabriqué par un procédé d'injection sous pression de métal léger et comporte des cavités qui reçoivent les becs de retenue développés par l'élargissement des surfaces frontales (8, 9) du tube (2) et
la pièce de palier (2) a un module d'élasticité plus grand que le corps de base (1).

4. Elément fonctionnel léger selon la revendication 3,
**caractérisé en ce que**
le tube (2) est tenu dans le corps de base (1) par une liaison par la forme et par la friction.

5. Elément fonctionnel léger selon l'une des revendications 3 ou 4,
**caractérisé par**
trois à six becs de retenue (12) répartis régulièrement à la périphérie.

6. Elément fonctionnel léger selon l'une des revendications 3 à 5,
**caractérisé en ce que**
les surfaces frontales (8, 9) du tube (2) se terminent à niveau avec les surfaces (10, 11) du corps de base (1) dans lequel sont réalisées les ouvertures (6, 7).

7. Elément fonctionnel léger selon l'une des revendications 3 ou 6,
**caractérisé en ce que**
le tube (2) est tenu dans le corps de base (1) avec du jeu d'ajustage et la liaison solidaire est uniquement assurée par les becs de retenue (12).

8. Elément fonctionnel léger selon l'une des revendications 3 à 7,
**caractérisé en ce que**
les ouvertures (6, 7) du corps de base (1) ne sont pas usinées.
